# EUROPÄISCHE PATENTSCHRIFT

(11) **EP 3 710 315 B1**
(45) Veröffentlichungstag und Bekanntmachung des Hinweises auf die Patenterteilung: **24.07.2024**
(21) Anmeldenummer: 18815105.4
(22) Anmeldetag: 14.11.2018
(51) Int. Cl.: B60R 13/04

(54) **BEPLANKUNGSTEIL FÜR EIN FAHRZEUG, FAHRZEUG SOWIE VERFAHREN UND VORRICHTUNG ZUR HERSTELLUNG EINES DERARTIGEN BEPLANKUNGSTEILS**
PANEL PART FOR A VEHICLE, VEHICLE, AND METHOD AND DEVICE FOR PRODUCING A PANEL PART OF THIS KIND
PIÈCE DE RECOUVREMENT POUR UN VÉHICULE, VÉHICULE, PROCÉDÉ ET DISPOSITIF DE FABRICATION D'UNE TELLE PIÈCE DE RECOUVREMENT

(30) Priorität: 14.11.2017 DE 102017220213
(43) Veröffentlichungstag der Anmeldung: 23.09.2020
(73) Patentinhaber: Volkswagen Aktiengesellschaft, 38440 Wolfsburg (DE)
(72) Erfinder: KURSAWE, Sascha, 29690 Essel (DE); RÜTTHARD, Niels, 38126 Braunschweig (DE)
(74) Vertreter: Schulz Junghans Patentanwälte PartGmbB
(86) Internationale Anmeldenummer: PCT/EP2018/000514
(87) Internationale Veröffentlichungsnummer: WO 2019/096437

(56) Entgegenhaltungen:
- EP-A1- 1 900 615
- EP-A1- 3 241 700
- DE-U1- 202006 004 901
- US-A1- 2008 251 667
- US-B1- 6 602 591

## Beschreibung

Die Erfindung betrifft ein Beplankungsteil für ein Fahrzeug nach dem Oberbegriff des Patentanspruchs 1 der Erfindung. Gemäß Anspruch 11 der Erfindung betrifft diese des Weiteren ein Fahrzeug mit einem derartigen Beplankungsteil. Gemäß der Merkmalskombination des Anspruchs 12 der Erfindung betrifft diese ferner ein Verfahren zur Herstellung eines derartigen Beplankungsteils und gemäß der Merkmalskombination des Patentanspruchs 13 der Erfindung eine Vorrichtung zur Durchführung des besagten Herstellungsverfahrens.

Aus der DE 10 2008 020 151 A1 ist ein Zierteil bekannt, welches ein Trägerteil und ein Designteil umfasst. Das Zierteil besteht aus einem Kunststoff und ist in einem 2-Komponentenverfahren (2K-Verfahren) hergestellt. Unter einem 2K-Verfahren wird hierbei ein Verfahren verstanden, bei dem zunächst eines der beiden Teile, vorzugsweise das Trägerteil, hergestellt wird und anschließend im gleichen Werkzeug das andere Teil, vorzugsweise das Designteil, hergestellt wird. Die DE 10 2013 010 127 A1 beschreibt ein Verfahren zur Herstellung eines Zierteils für ein Fahrzeug, bei dem ein gegebenenfalls vorgeformtes Designteil, welches als Stanzteil aus Aluminiumblech besteht, in ein Kunststoff-Spritzgusswerkzeug eingelegt wird und in demselben zur Ausbildung eines Trägerteils mit einem Kunststoff hinterspritzt wird. Die DE 20 2015 107 059 U1 beschreibt eine Schwellerverkleidung für ein Kraftfahrzeug, welche aus wenigstens zwei Schichten einstückig im Zweikomponenten-Spritzguss ausgebildet ist. Hierbei besteht eine Innenschicht aus einem mit Füllstoffen verstärktem thermoplastischen Werkstoff, wogegen eine den Sichtbereich bildende Außenschicht aus einem ungefüllten, oder aus einem einen geringen Gehalt an Füllstoffen aufweisenden, weiteren thermoplastischen Werkstoff besteht. EP1900615A1 offenbart ein Beplankungsteil mit einem Designteil und mit zumindest einem Trägerteil, wobei das zumindest eine Trägerteil eine Basisstruktur und wenigstens eine Stützstruktur aufweist und unter Vermittlung der wenigstens einen Stützstruktur am Designteil befestigt ist, wobei das Trägerteil derart ausgebildet und mittels der wenigstens einen Stützstruktur am Designteil befestigt ist, dass dasselbe mit den Designteil zumindest abschnittsweise ein im Querschnitt gesehen geschlossenes Hohlprofil ausbildet, wobei die wenigstens eine Stützstruktur über einen Verbindungsabschnitt mit der Basisstruktur verbunden ist, welcher Verbindungsabschnitt im Verhältnis zum Bereich der Basisstruktur eine geminderte Materialstärke aufweist.

Gemäß einem ersten Aspekt der Erfindung ist es Aufgabe derselben, ein im Hinblick auf den Stand der Technik alternatives Beplankungsteil für ein Fahrzeug zu schaffen, welches mit geringem Aufwand herstellbar ist. Gemäß einem zweiten Aspekt der Erfindung ist es Aufgabe derselben, ein Fahrzeug mit einem derartigen Beplankungsteil zur Verfügung zu stellen. Gemäß einem dritten Aspekt der Erfindung ist es Aufgabe derselben, ein geeignetes Verfahren zur Herstellung eines derartigen Beplankungsteils anzugeben. Gemäß einem vierten Aspekt der Erfindung ist es Aufgabe derselben, eine geeignete Vorrichtung zur Durchführung des besagten Verfahrens zu schaffen, welche einfach und kostengünstig im Betrieb ist.

Gelöst wird die gestellte Aufgabe mit den Merkmalen der unabhängigen Ansprüche 1, 11, 12 und 13. Vorteilhafte Weiterbildungen oder Ausgestaltungen der Erfindung ergeben sich aus den jeweils nachgeordneten Unteransprüchen.

Ausgehend von einem Beplankungsteil für ein Fahrzeug, welches ein Designteil und zumindest ein Trägerteil aufweist, wobei das zumindest eine Trägerteil eine Basisstruktur mit wenigstens einer Stützstruktur aufweist und unter Vermittlung der wenigstens einen Stützstruktur am Designteil befestigt ist, wird die gestellte Aufgabe dadurch gelöst, dass das Trägerteil derart ausgebildet und mittels der wenigstens einen Stützstruktur am Designteil befestigt ist, dass dasselbe mit den Designteil zumindest abschnittsweise ein im Querschnitt gesehen geschlossenes Hohlprofil ausbildet.

Hierdurch ist ein Beplankungsteil geschaffen, welches einfach und kostengünstig montierbar ist sowie hohen dynamischen und statischen Belastungen widersteht.

In einer vorteilhaften Ausgestaltung ist vorgesehen, dass das Trägerteil unter Vermittlung der wenigstens einen Stützstruktur durch Stoffschluss am Designteil befestigt ist. Das bedeutet, dass das Trägerteil mittels der wenigstens einen Stützstruktur am Designteil stoffschlüssig befestigt ist. Hierunter ist im Sinne der Erfindung auch zu verstehen, dass eine Verbindung von Trägerteil und Designteil in Kunststoff-Spritzprozess erfolgt, wobei sich erstarrende KunststoffSchmelze mit einem Kunststoffteil stoffschlüssig verbindet.

Insbesondere kann das Trägerteil unter Vermittlung der wenigstens einen Stützstruktur durch Stoffschluss flächenförmig am Designteil befestigt sein.

Dabei kann die flächenförmige Befestigung derart ausgeführt sein, dass eine stirnseitige Fläche der Stützstruktur stumpf an der Rückseite des Designteils anliegt und dort eine stoffschlüssige Verbindung realisiert ist.

Alternativ kann auch die flächenförmige Befestigung durch Stoffschluss derart ausgeführt sein, dass die Stützstruktur in dem das Designteil kontaktierenden Bereich sehr dünnwandig ist bzw. spitz ausgeführt ist, jedoch eine zusätzliche Klebemasse eine flächige Anlage an der Stützstruktur und/oder am Designteil ausführt.

In Fortbildung der Erfindung ist vorgesehen, dass die wenigstens eine Stützstruktur bevorzugt über einen Verbindungsabschnitt mit der Basisstruktur verbunden ist, welcher Verbindungsabschnitt im Verhältnis zum übrigen Bereich der Basisstruktur eine geminderte Materialstärke aufweist. Überraschend wurde gefunden, dass hierdurch vorteilhaft Abzeichnungen des Trägerteils auf der Sichtseite des Designteils verhindert sind, zumindest jedoch die Gefahr der Ausbildung besagter Abzeichnungen wirkungsvoll gemindert ist.

Das Beplankungsteil kann dabei derart ausgeführt sein, dass der Verbindungsabschnitt mit der geminderten Materialstärke den Übergang zum Designteil ausbildet.

Entgegen der zuvor erwähnten Variante bildet somit hier die Stützstruktur keinen breiten Fuß aus, sondern liegt lediglich mit einer vergleichsweise geringeren Fläche an der Rückseite des Designteils an und ist dort befestigt, vorzugsweise stoffschlüssig befestigt.

Insbesondere kann die Stützstruktur zumindest einen Schenkel umfassen, der sich an die Basisstruktur anschließt, wobei das Designsteil zwei zueinander winklig verlaufende Flächenabschnitte umfasst und der Schenkel der Stützstruktur im Winkelscheitel befestigt ist. Dabei kann bei Umgebung der Stützstruktur mit Klebemasse im an dem Designteil angrenzendem Bereich eine formschlüssige Fixierung der Stützstruktur in Bezug zum Designteil begünstigt werden bzw. ermöglicht werden.

Des Weiteren ist bevorzugt vorgesehen, dass das Trägerteil des Beplankungsteils zumindest ein erstes Mittel zur Anbindung desselben an einem das Beplankungsteil tragenden Karosserieteil des Fahrzeugs aufweist und/oder dem Trägerteil zumindest ein zweites Mittel zur Anbindung desselben am besagten Karosserieteil zugeordnet oder zuordenbar ist. Das besagte erste Mittel zur Anbindung ist z.B. durch eine Bohrung in der Basisstruktur des Trägerteils gebildet, welche beispielsweise von einem zweiten Mittel zur Anbindung in Form eines einem Clipselement zugeordneten Spreizpins durchsetzt ist, wobei das Clipselement wiederum mit dem Karosserieteil verbunden oder verbindbar ist. Hierdurch ist ein besonders einfach zu erstellender Fügeverbund zwischen dem Beplankungsteil und dem dasselbe tragenden Karosserieteil ermöglicht.

Um einen besonders festen Fügeverbund zwischen dem Beplankungsteil und dem Karosserieteil zu schaffen, ist ferner bevorzugt vorgesehen, dass das Designteil zumindest ein drittes Mittel zur Anbindung desselben an einem das Beplankungsteil tragenden Karosserieteil des Fahrzeugs aufweist und/oder dem Designteil zumindest ein drittes Mittel zur Anbindung desselben am Karosserieteil des Fahrzeugs zugeordnet oder zuordenbar ist. Das besagte dritte Mittel zur Anbindung kann beispielsweise durch ein Klebeband gebildet sein.

Als besonders vorteilhaft haben sich ein Trägerteil und ein Designteil aus einem Kunststoffmaterial, insbesondere aus einem thermoplastischen Kunststoff erwiesen, welcher einfach und kostengünstig verarbeitbar und bezüglich der gewünschten mechanischen Eigenschaften, beispielsweise durch Einbringen von Verstärkungselementen, wie Faserelementen, in die Kunststoffmatrix, in weiten Grenzen einstellbar ist.

Das erfindungsgemäß ausgebildete Beplankungsteil mit besagtem sichtbaren Designteil und zumindest einem Trägerteil ist vorteilhaft als Schwellerbeplankung, als Türbeplankung, als Radbeplankung, als Stoßfänger, als Blende oder dgl. mehr ausgebildet.

Die Erfindung betrifft auch ein Fahrzeug, mit einem Beplankungsteil der vorstehend beschriebenen Art.

Das Verfahren zur Herstellung eines Beplankungsteils der vorbeschriebenen Art, zeichnet sich durch folgende Schritte aus:
a) Bereitstellung einer beweglichen Werkzeughälfte und einer ersten feststehenden Werkzeughälfte eines Kunststoff-Spritzgusswerkzeugs,
b) Bereitstellung zumindest eines Schiebers,
c) Positionierung der beweglichen Werkzeughälfte und der ersten feststehenden Werkzeughälfte sowie des zumindest einen Schiebers derart zueinander, dass im Bereich einer ersten Oberflächenkontur der ersten feststehenden Werkzeughälfte zwischen der beweglichen Werkzeughälfte, der ersten feststehenden Werkzeughälfte sowie dem zumindest einen Schieber eine erste Kavität ausgebildet wird, welche der Struktur des Trägerteils entspricht,
d) Ausfüllen der ersten Kavität mit plastifiziertem Kunststoffmaterial,
e) nach Erstarren des Kunststoffmaterials, Lösen der beweglichen Werkzeughälfte samt des aus besagtem Kunststoffmaterial gebildeten Trägerteils und des zumindest einen Schiebers von der feststehenden Werkzeughälfte,
f) Überführung der beweglichen Werkzeughälfte samt des aus besagtem Kunststoffmaterial gebildeten Trägerteils als Halbzeug und des zumindest einen Schiebers in einen Bereich einer zweiten Oberflächenkontur der ersten feststehenden Werkzeughälfte oder alternativ in einen Bereich einer zweiten Oberflächenkontur einer von der ersten feststehenden Werkzeughälfte separierten zweiten feststehenden Werkzeughälfte derart, dass zwischen der beweglichen Werkzeughälfte samt dem Trägerteil und dem zumindest einen Schieber und der ersten oder zweiten feststehenden Werkzeughälfte eine zweite Kavität ausgebildet wird, welche der Struktur des Designteils entspricht und in unmittelbarem Kontakt mit dem gebildeten Trägerteil steht,
g) Ausfüllen der zweiten Kavität mit plastifiziertem Kunststoffmaterial derart, dass das Kunststoffmaterial das Trägerteil kontaktiert und in Befestigung, insbesondere Stoffschluss, mit demselben tritt, und
h) nach Erstarren des Kunststoffmaterials, Lösen der Werkzeughälften, des Schiebers und des aus besagtem Trägerteil und Designteil gebildeten Beplankungsteils voneinander und Entnahme des Beplankungsteils aus dem Kunststoff-Spritzgusswerkzeug.

Bei einfacher und kostengünstiger Verfahrensdurchführung eröffnet ein derartiges Herstellungsverfahren erweiterte Möglichkeiten in der Auslegung eines Befestigungs- und Steifigkeitskonzeptes sowie in der geometrischen Gestaltung des herzustellenden Beplankungsteils.

Die Vorrichtung zur Durchführung des vorstehenden Verfahrens zeichnet sich durch ein Kunststoff-Spritzgusswerkzeug aus, welches
a) eine bewegliche Werkzeughälfte, zumindest einen Schieber sowie
b1) eine erste feststehende Werkzeughälfte oder
b2) alternativ eine erste feststehende Werkzeughälfte und eine zweite feststehende Werkzeughälfte aufweist,
c1) wobei im Hinblick auf Punkt b1) die bewegliche Werkzeughälfte und der zumindest eine Schieber derart zueinander und zur ersten feststehenden Werkzeughälfte angeordnet oder anordenbar sind, dass im Bereich einer ersten Oberflächenkontur der ersten feststehenden Werkzeughälfte zwischen den vorgenannten eine erste Kavität zur Erstellung des Trägerteils und im Bereich einer zweiten Oberflächenkontur der ersten feststehenden Werkzeughälfte zwischen den vorgenannten eine zweite Kavität zur Erstellung des Designteils ausgebildet oder ausbildbar ist, oder
c2) wobei im Hinblick auf Pkt. b2) die bewegliche Werkzeughälfte und der zumindest eine Schieber derart zueinander und zur ersten feststehenden Werkzeughälfte angeordnet oder anordenbar sind, dass im Bereich einer ersten Oberflächenkontur der ersten feststehenden Werkzeughälfte zwischen der beweglichen Werkzeughälfte, der ersten feststehenden Werkzeughälfte und dem zumindest einen Schieber eine erste Kavität zur Erstellung des Trägerteils ausgebildet oder ausbildbar ist, und dass die bewegliche Werkzeughälfte und der zumindest eine Schieber samt des/eines erstellten Trägerteils im Bereich einer zweiten Oberflächenkontur der zweiten feststehenden Werkzeughälfte derart zur zweiten feststehenden Werkzeughälfte angeordnet oder anordenbar sind, dass eine zweite Kavität zur Erstellung des Designteils ausgebildet oder ausbildbar ist.

Nachstehend wird die Erfindung anhand der in den Zeichnungen schematisch dargestellten Ausführungsbeispiele näher erläutert. Sie ist jedoch nicht auf diese beschränkt, sondern erfasst alle durch die Patentansprüche definierten Ausgestaltungen. Es zeigen:
- Fig. 1: äußerst schematisch eine Aufsicht auf ein mit einem erfindungsgemäßen Beplankungsteil ausgestattetes Karosserieteil eines Fahrzeugs,
- Fig. 2: den Schnitt "I-I" nach Fig. 1 mit der Darstellung eines Beplankungsteils gemäß einer ersten Ausführungsvariante desselben,
- Fig. 3: äußerst schematisch eine Schnittansicht eines Kunststoff-Spritzgusswerkzeugs während der Herstellung eines Trägerteils des Beplankungsteils nach Fig. 2,
- Fig. 4: äußerst schematisch eine Schnittansicht des Kunststoff-Spritzgusswerkzeugs während der Herstellung eines Designteils des Beplankungsteils nach Fig. 2 und Anbindung desselben an das Trägerteil,
- Fig. 5: den Schnitt "II-II" nach Fig. 1 mit der Darstellung eines Beplankungsteils gemäß einer zweiten Ausführungsvariante desselben,
- Fig. 6: die Einzelheit "Z" nach Fig. 5,
- Fig. 7: äußerst schematisch eine Schnittansicht eines Kunststoff-Spritzgusswerkzeugs während der Herstellung eines Trägerteils des Beplankungsteils nach Fig. 5,
- Fig. 8: äußerst schematisch eine Schnittansicht des Kunststoff-Spritzgusswerkzeugs während der Herstellung eines Designteils des Beplankungsteils nach Fig. 5 und Anbindung desselben an das Trägerteil, und
- Fig. 9: eine weitere alternative Ausführungsform des erfindungsgemäßen Beplankungsteils im Schnitt.

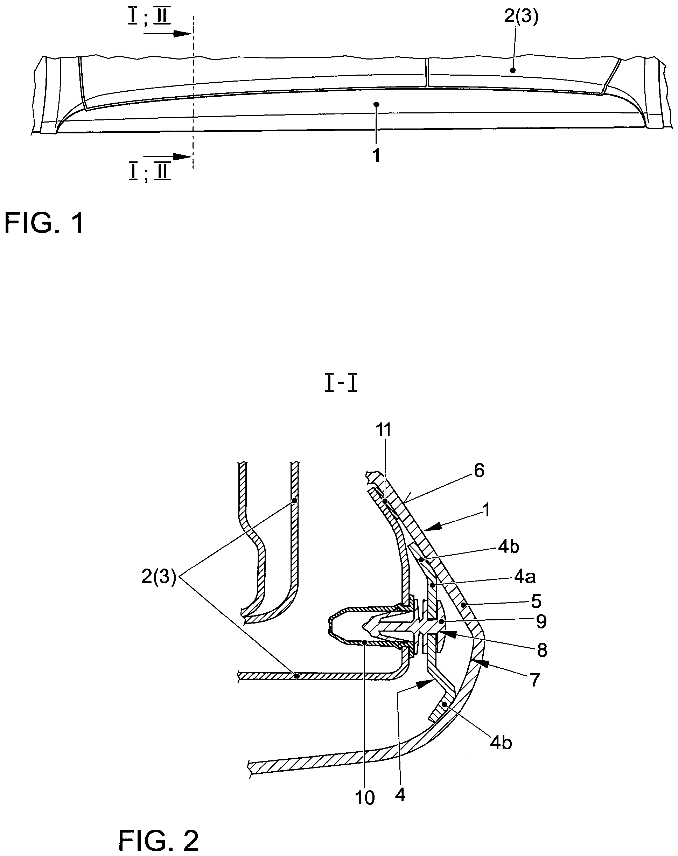

Fig. 1 zeigt lediglich beispielgebend ein Beplankungsteil 1 in Form einer vorliegend Seiten-Schwellerbeplankung, welche/s an einem Karosserieteil 2 in Form eines Seiten-Schwellers eines Fahrzeugs 3, insbesondere Kraftfahrzeugs, befestigt ist.

Erste Ausführungsvariante (Fig. 2-4):
Das Beplankungsteil 1 umfasst gemäß Fig. 2 ein Trägerteil 4 zur Anbindung des Beplankungsteils 1 an besagtes Karosserieteil 2 sowie ein Designteil 5 mit einer Sichtseite 6. Das Trägerteil 4 und das Designteil 5 bestehen jeweils aus einem Kunststoff, welcher gemäß diesem Ausführungsbeispiel Polypropylen (PP) aufweist. Das Trägerteil 4 und/oder das Designteil 5 können auch aus einem faserverstärkten Kunststoff bestehen, indem in die Kunststoffmatrix beispielsweise Glas- oder Kohlenstoffasern eingebettet sind. Darüber hinaus beschränkt sich die Erfindung nicht auf Polypropylen, sondern erfasst jedweden geeigneten Kunststoff, z.B. auch einen Kunststoff, welcher Polymethylmethacrylat (PMMA) aufweist. Das besagtes Trägerteil 4 und Designteil 5 umfassende Beplankungsteil 1 ist nach einem Kunststoff-Spritzgussverfahren, gemäß diesem Ausführungsbeispiel nach einem 2-Komponenten-Kunststoff-Spritzgussverfahren hergestellt, worauf unten näher eingegangen wird.

Wie der Fig. 2 weiter zu entnehmen ist, weist das Designteil 5 des Beplankungsteils 1 im Querschnitt gesehen eine Hohlprofilstruktur derart auf, dass dasselbe in Fahrzeugquerrichtung (Y-Richtung) gesehen nach Fahrzeug-außen gewölbt ausgebildet ist. Das Trägerteil 4 ist fahrzeuginnenseitig des Designteils 5 an dasselbe angeschlossen und überspannt sozusagen die Wölbung des Designteils 5, wodurch ein im Querschnitt gesehen geschlossenes Hohlprofil 7 ausgebildet ist/wird.

Das Trägerteil 4 weist hierzu eine die besagte Wölbung überspannende Basisstruktur 4a sowie in Fahrzeughochrichtung (Z-Richtung) gesehen beidenends je eine Stützstruktur 4b nach Art eines Anschlussflansches mit relativ großflächigen Kontaktflächen auf, vermittels derer das Trägerteil 4 flächenförmig am Designteil 5 angeschlossen ist. Aufgrund des gewählten Herstellungsverfahrens (2-Komponenten-Kunststoff-Spritzgussverfahren) ist die Verbindung zwischen dem Trägerteil 4 und dem Designteil 5 durch Stoffschluss bewirkt.

Wie der Fig. 2 noch zu entnehmen ist, weist das Trägerteil 4 ein erstes Mittel 8 zur Anbindung desselben an dem das Beplankungsteil 1 tragenden Karosserieteil 2 des Fahrzeugs 3 auf. Das erste Mittel 8 zur Anbindung ist gemäß diesem Ausführungsbeispiel durch eine Bohrung in der Basisstruktur 4a des Trägerteils 4 gebildet. Besagter Bohrung ist ein zweites Mittel 9 zur Anbindung in Form eines Spreizpins zugeordnet, welcher die besagte Bohrung durchsetzt, sich an der Basisstruktur 4a abstützt und anderenends von einem am besagten Karosserieteil 2 festgelegten Clipselement 10 form- und/oder kraftschlüssig aufgenommen ist.

Darüber hinaus ist gemäß diesem Ausführungsbeispiel dem Designteil 5 ein drittes Mittel 11 zur Anbindung in Form eines Klebebandes zugeordnet, welches ausgebildet ist, das Designteil 5 am Karosserieteil 2 des Fahrzeugs 3 zu befestigen. Das Klebeband ist vorliegend an einem in Fahrzeughochrichtung (Z-Richtung) oberen Endbereich des Designteils 5 angeordnet, welcher insbesondere beim Ein- und Ausstieg von Fahrzeuginsassen erhöhten Beanspruchungen unterliegen kann.

Nachfolgend wird das Verfahren zur Herstellung des vorstehend beschriebenen Beplankungsteils 1, vorliegend beispielgebend der Schwellerbeplankung, beschrieben.

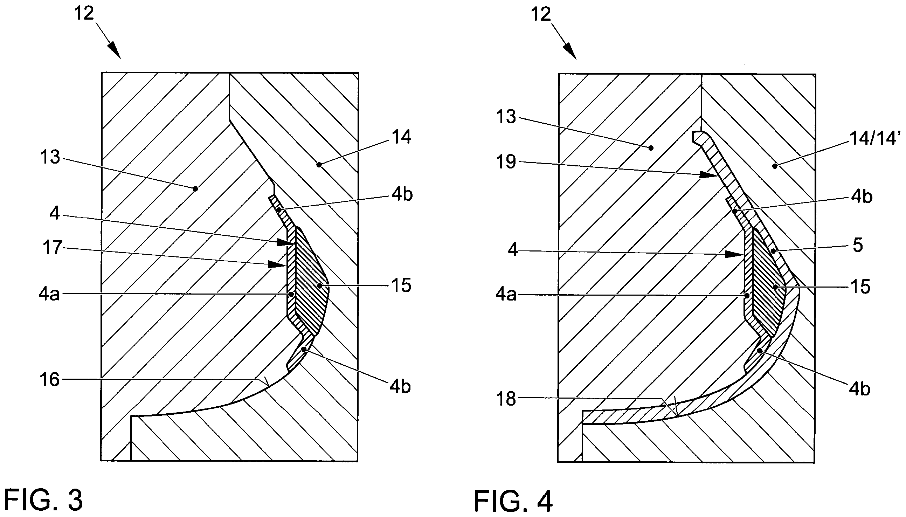

Im Hinblick auf Fig. 3 weist das hierzu eingesetzte Kunststoff-Spritzgusswerkzeug 12 eine bewegliche Werkzeughälfte 13 und eine erste feststehende Werkzeughälfte 14 eines Kunststoff-Spritzgusswerkzeugs 14 auf. Darüber hinaus ist ein an sich bekannter Schieber 15 vorgesehen, der seinerseits während des Herstellungsverfahrens sozusagen temporär den Hohlraum des herzustellenden Beplankungsteils 1 einnimmt.

Die bewegliche Werkzeughälfte 13, die erste feststehende Werkzeughälfte 14 sowie der Schieber 15 werden derart zueinander positioniert, dass im Bereich einer ersten Oberflächenkontur 16 der ersten feststehenden Werkzeughälfte 14 zwischen der beweglichen Werkzeughälfte 13, der ersten feststehenden Werkzeughälfte 13 sowie dem zumindest einen Schieber 15 eine erste Kavität 17 ausgebildet wird, welche der Struktur des Trägerteils 4 entspricht. Die erste feststehende Werkzeughälfte 14 weist demgemäß auf Seiten der beweglichen Werkzeughälfte 13 eine Kontur auf, die komplementär zu den korrespondierenden Konturen der beweglichen Werkzeughälfte 13 und des Schiebers 15 ist sowie die erste Kavität 17 benachbart zur ersten feststehenden Werkzeughälfte 14, d.h. im Anschlussbereich des auszubildenden Trägerteils 4 an das nachfolgend auszubildende Designteil 5 schließt.

Hiernach folgt das Ausfüllen der ersten Kavität 17 mit plastifiziertem Kunststoffmaterial. Nach dem Erstarren des Kunststoffmaterials wird im Hinblick auf Fig. 4 die bewegliche Werkzeughälfte 13 samt des aus besagtem Kunststoffmaterial gebildeten Trägerteils 4 als sogenanntes Halbzeug und des Schiebers 15 von der feststehenden Werkzeughälfte 14 gelöst und anschließend in den Bereich einer zweiten Oberflächenkontur 18 der ersten feststehenden Werkzeughälfte 14 überführt und dort derart positioniert, dass zwischen der beweglichen Werkzeughälfte 13 samt dem ausgebildeten Trägerteil 4 und dem Schieber 15 sowie der ersten feststehenden Werkzeughälfte 14 eine zweite Kavität 19 ausgebildet wird, welche der Struktur des Designteils 5 entspricht und in unmittelbarem Kontakt mit dem gebildeten Trägerteil 4 steht. Hiernach wird die zweite Kavität 19 derart mit plastifiziertem Kunststoffmaterial gefüllt, dass das Kunststoffmaterial das Trägerteil 4 kontaktiert und in Stoffschluss mit demselben tritt. Nach dem Erstarren des Kunststoffmaterials, Lösen der Werkzeughälften 13, 14, des Schiebers 15 und des aus besagtem Trägerteil 4 und Designteil 5 gebildeten Beplankungsteils 1 voneinander kann das Beplankungsteil 1 dem Kunststoff-Spritzgusswerkzeug 12 entnommen werden.

Das vorstehend beschriebene Ausführungsbeispiel stellt auf ein Kunststoff-Spritzgusswerkzeug 12 mit einer einzigen respektive ersten feststehenden Werkzeughälfte 14 ab, welche zwei unterschiedliche Bereiche zur Darstellung der besagten ersten und zweiten Oberflächenkontur 16, 18 aufweist. Die Erfindung beschränkt sich jedoch nicht auf diese Ausführungsform, sondern erfasst auch ein Kunststoff-Spritzgusswerkzeug 12, welches eine erste feststehende Werkzeughälfte 14 und eine von der ersten (14) separierte, zweite feststehende Werkzeughälfte 14' aufweist. Die erste feststehende Werkzeughälfte 14 weist hierbei die erste Oberflächenkontur 16 auf, wogegen die zweite feststehende Werkzeughälfte 14' die zweite Oberflächenkontur 18 aufweist (vgl. Fig. 4).

Darüber hinaus beschränkt sich die Erfindung auch nicht auf die vorstehend beispielgebend beschriebene und in den Figuren gezeigte Schwellerbeplankung, sondern erfasst jedwedes erfindungsgemäß ausgebildetes Beplankungsteil 1 eines Fahrzeugs 3, beispielsweise auch eine Türbeplankung, eine Radbeplankung, einen Stoßfänger, eine Blende oder dgl. mehr (nicht zeichnerisch dargestellt).

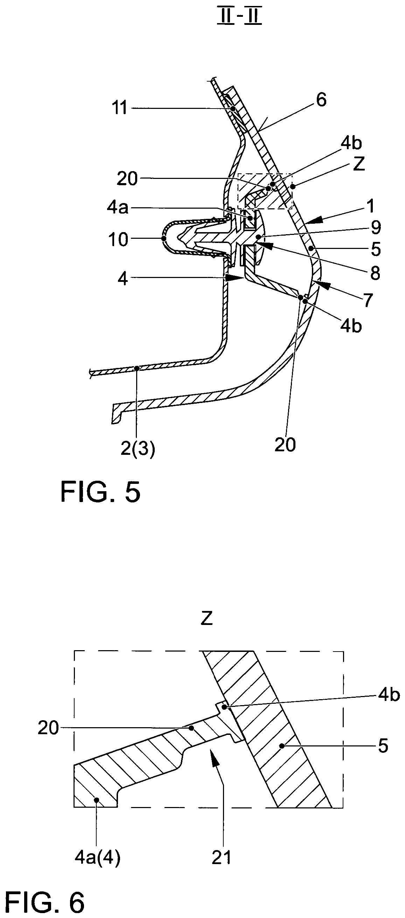

Zweite Ausführungsvariante (Fig. 5-8):
Die Fig. 5 bis 8 zeigen eine zweite Ausführungsvariante der Erfindung, wobei funktionsgleiche Teile mit gleichen Bezugszeichen wie in den vorherigen Zeichnungsfiguren bezeichnet sind, so dass zu deren Erläuterung auch auf die vorstehende Beschreibung der ersten Ausführungsvariante der Erfindung verwiesen wird.

Was das in den Fig. 5 bis 8 gezeigte und erfindungsgemäß hergestellte Beplankungsteil 1 anbelangt, unterscheidet sich dieses vom vorbeschriebenen lediglich dadurch, dass die Stützstrukturen 4b jeweils über einen Verbindungsabschnitt 20 mit der Basisstruktur 4a verbunden sind, welcher Verbindungsabschnitt 20 im Verhältnis zum übrigen Bereich der Basisstruktur 4a eine geminderte Materialstärke respektive eine Materialausdünnung 21 aufweist (vgl. insbes. Fig. 5 und 6). Wie bereits oben dargetan hat diese Maßnahme den Vorteil, dass hierdurch Abzeichnungen des Trägerteils 4 auf der Sichtseite 6 des Designteils 5 verhindert sind, zumindest jedoch die Gefahr der Ausbildung besagter Abzeichnungen wirkungsvoll gemindert ist.

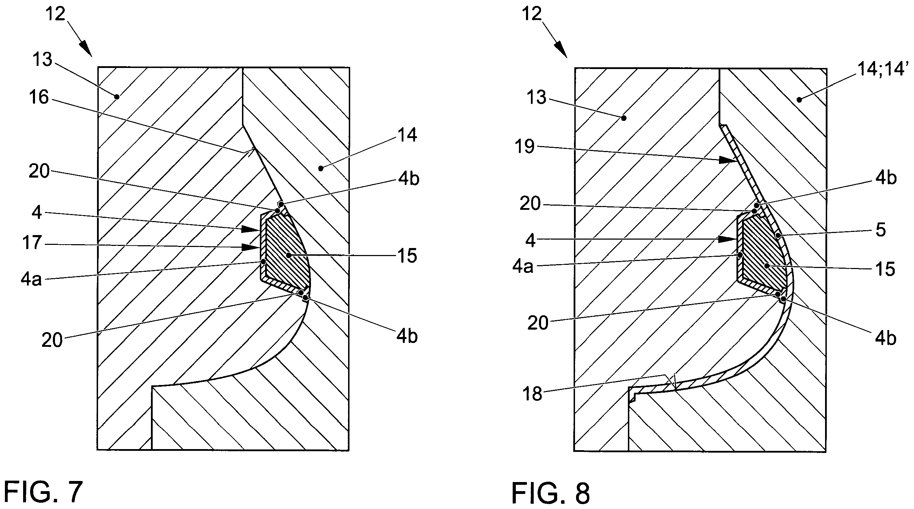

Das Verfahren zur Herstellung dieses Beplankungsteils 1 sowie die Vorrichtung zur Durchführung des Verfahrens entsprechen im Wesentlichen dem vorbeschriebenen Verfahren sowie der vorbeschriebenen Vorrichtung zur ersten Ausführungsvariante der Erfindung, so dass auf weitestgehend identische Ausführungen im Rahmen der Beschreibung dieser zweiten Ausführungsvariante der Erfindung der Einfachheit halber verzichtet wurde (vgl. hierzu insbes. Fig. 7 und 8).

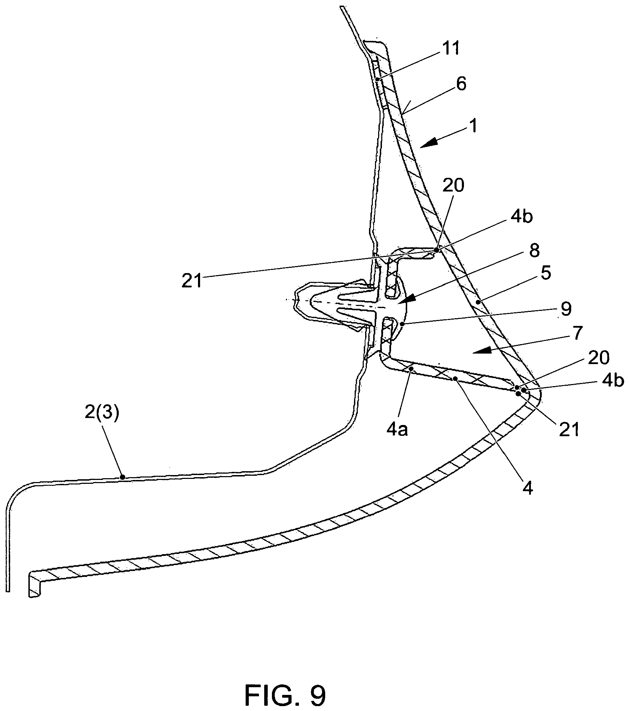

Figur 9 zeigt eine weitere alternative Ausführungsform des erfindungsgemäßen Beplankungsteils im Schnitt. Diese Ausführungsform ähnelt in weiten Teilen der in Figur 5 dargestellten Ausführungsform, so dass bezüglich mit gleichen Bezugszeichen bezeichneten Bauteilen und deren Beschreibung auf die Beschreibung zu Figur 5 verwiesen wird. Auch in dieser Ausführungsform ist auf ein extra Clipselement 10 verzichtet worden.

In der Ausführungsform gemäß Figur 9 ist ersichtlich, dass der Bereich mit der Materialausdünnung 21 im Verbindungabschnitt 20 direkt die Kontaktierung mit dem Designteil 5 realisiert, und nicht wie in Figur 5 dargestellt ausgehend vom Fahrzeug 2 bzw. Karosserieteil 2 in Trägerteil 4 nach der Basisstruktur 4a zunächst eine Materialausdünnung 21 vorliegt und dann zur Verbindung mit dem Designteil 5 eine Zunahme der Materialdicke des Trägerteils 4 realisiert ist, sondern die Stützstruktur 4b im Bereich der Materialausdünnung 21 unmittelbar an das Designteil 5 angeschlossen ist. Das bedeutet, dass der Verbindungsabschnitt 20 mit der geminderten Materialstärke bzw. der Materialausdünnung 21 den Übergang zum Designteil 5 ausbildet.

In dieser Ausführungsform wird durch die geringe kontaktierende Fläche in optimaler Weise erreicht, dass ein optisches Abzeichnen auf der Sichtweite des Designteils 5 verhindert wird.

### Bezugszeichenliste

- 1: Beplankungsteil
- 2: Karosserieteil
- 3: Fahrzeug
- 4: Trägerteil
- 4a: Basisstruktur
- 4b: Stützstruktur
- 5: Designteil
- 6: Sichtseite (Designteil 5)
- 7: Hohlprofil
- 8: erstes Mittel zur Anbindung
- 9: zweites Mittel zur Anbindung
- 10: Clipselement
- 11: drittes Mittel zur Anbindung
- 12: Kunststoff-Spritzgusswerkzeug
- 13: bewegliche Werkzeughälfte
- 14: erste feststehende Werkzeughälfte
- 14': zweite feststehende Werkzeughälfte
- 15: Schieber
- 16: erste Oberflächenkontur
- 17: erste Kavität
- 18: zweite Oberflächenkontur
- 19: zweite Kavität
- 20: Verbindungsabschnitt
- 21: Materialausdünnung

## Patentansprüche

1. Beplankungsteil (1) für ein Fahrzeug (3), mit einem Designteil (5) und mit zumindest einem Trägerteil (4), wobei das zumindest eine Trägerteil (4) eine Basisstruktur (4a) und wenigstens eine Stützstruktur (4b) aufweist und unter Vermittlung der wenigstens einen Stützstruktur (4b) am Designteil (5) befestigt ist, wobei das Trägerteil (4) derart ausgebildet und mittels der wenigstens einen Stützstruktur (4b) am Designteil (5) befestigt ist, dass dasselbe mit den Designteil (5) zumindest abschnittsweise ein im Querschnitt gesehen geschlossenes Hohlprofil (7) ausbildet,
wobei die wenigstens eine Stützstruktur (4b) über einen Verbindungsabschnitt (20) mit der Basisstruktur (4a) verbunden ist, welcher Verbindungsabschnitt (20) im Verhältnis zum Bereich der Basisstruktur (4a) eine geminderte Materialstärke aufweist, wobei der Verbindungsabschnitt (20) mit der geminderten Materialstärke den Übergang zum Designteil ausbildet, und wobei die Stützstruktur (4b) einen Schenkel umfasst, der sich an die Basisstruktur (4a) anschließt, wobei das Designsteil (5) zwei zueinander winklig verlaufende Flächenabschnitte umfasst und der Schenkel der Stützstruktur (4b) im Winkelscheitel befestigt ist.

2. Beplankungsteil (1) nach Anspruch 1, **dadurch gekennzeichnet, dass** das Trägerteil (4) unter Vermittlung der wenigstens einen Stützstruktur (4b) durch Stoffschluss am Designteil (5) befestigt ist.

3. Beplankungsteil (1) nach Anspruch 2, **dadurch gekennzeichnet, dass** das Trägerteil (4) unter Vermittlung der wenigstens einen Stützstruktur (4b) durch Stoffschluss flächenförmig am Designteil (5) befestigt ist.

4. Beplankungsteil (1) nach einem der vorhergehenden Ansprüche, **dadurch gekennzeichnet, dass** das Trägerteil (4) zumindest ein erstes Mittel (8) zur Anbindung desselben an einem das Beplankungsteil (1) tragenden Karosserieteil (2) des Fahrzeugs (3) aufweist und/oder dem Trägerteil (4) zumindest ein zweites Mittel (9) zur Anbindung desselben am besagten Karosserieteil (2) zugeordnet oder zuordenbar ist.

5. Beplankungsteil (1) nach einem der vorhergehenden Ansprüche, **dadurch gekennzeichnet, dass** das Designteil (5) zumindest ein drittes Mittel (11) zur Anbindung desselben an einem das Beplankungsteil (1) tragenden Karosserieteil (2) des Fahrzeugs (3) aufweist und/oder dem Designteil (5) zumindest ein drittes Mittel (11) zur Anbindung desselben am besagten Karosserieteil (2) zugeordnet oder zuordenbar ist.

6. Beplankungsteil (1) nach einem der vorhergehenden Ansprüche, **dadurch gekennzeichnet, dass** das Trägerteil (4) und das Designteil (5) aus einem Kunststoffmaterial gebildet sind.

7. Beplankungsteil (1) nach einem der vorhergehenden Ansprüche, **dadurch gekennzeichnet, dass** das Beplankungsteil (1) durch eine Schwellerbeplankung, eine Türbeplankung, eine Radbeplankung, einen Stoßfänger, eine Blende oder dgl. mehr mit einem sichtbaren Designteil (5) und zumindest einem Trägerteil (4) gebildet ist.

8. Fahrzeug (3), mit einem Beplankungsteil (1) nach einem der Ansprüche 1 bis 7.

9. Verfahren zur Herstellung eines Beplankungsteils (1) für ein Fahrzeug (3) nach einem der Ansprüche 1 bis 7, mit folgenden Schritten:
a) Bereitstellung einer beweglichen Werkzeughälfte (13) und einer ersten feststehenden Werkzeughälfte (14) eines Kunststoff-Spritzgusswerkzeugs (12),
b) Bereitstellung zumindest eines Schiebers (15),
c) Positionierung der beweglichen Werkzeughälfte (13) und der ersten feststehenden Werkzeughälfte (14) sowie des zumindest einen Schiebers (15) derart zueinander, dass im Bereich einer ersten Oberflächenkontur (16) der ersten feststehenden Werkzeughälfte (14) zwischen der bewegliche Werkzeughälfte (13), der ersten feststehenden Werkzeughälfte (14) sowie dem zumindest einen Schieber (15) eine erste Kavität (17) ausgebildet wird, welche der Struktur des Trägerteils (4) entspricht,
d) Ausfüllen der ersten Kavität (17) mit plastifiziertem Kunststoffmaterial,
e) nach Erstarren des Kunststoffmaterials, Lösen der beweglichen Werkzeughälfte (13) samt des aus besagtem Kunststoffmaterial gebildeten Trägerteils (4) und des zumindest einen Schiebers (15) von der feststehenden Werkzeughälfte (14),
f) Überführung der beweglichen Werkzeughälfte (13) samt des aus besagtem Kunststoffmaterial gebildeten Trägerteils (4) als Halbzeug und des zumindest einen Schiebers (15) in einen Bereich einer zweiten Oberflächenkontur (18) der ersten feststehenden Werkzeughälfte (14) oder alternativ in einen Bereich einer zweiten Oberflächenkontur (18) einer von der ersten feststehenden Werkzeughälfte (14) separierten zweiten feststehenden Werkzeughälfte (14') derart, dass zwischen der beweglichen Werkzeughälfte (13) samt dem Trägerteil (4) und dem zumindest einen Schieber (15) und der ersten oder zweiten feststehenden Werkzeughälfte (14, 14') eine zweite Kavität (19) ausgebildet wird, welche der Struktur des Designteils (5) entspricht und in unmittelbarem Kontakt mit dem gebildeten Trägerteil (4) steht,
g) Ausfüllen der zweiten Kavität (19) mit plastifiziertem Kunststoffmaterial derart, dass das Kunststoffmaterial das Trägerteil (4) kontaktiert und in Befestigung, insbesondere in Stoffschluss, mit demselben tritt, und
h) nach Erstarren des Kunststoffmaterials, Lösen der Werkzeughälften (13; 14, 14'), des Schiebers (15) und des aus besagtem Trägerteil (4) und Designteil (5) gebildeten Beplankungsteils (1) voneinander und Entnahme des Beplankungsteils (1) aus dem Kunststoff-Spritzgusswerkzeug (12).

10. Vorrichtung zur Durchführung des Verfahrens nach Anspruch 9, mit einem Kunststoff-Spritzgusswerkzeug (12), welches
a) eine bewegliche Werkzeughälfte (13), zumindest einen Schieber (15) sowie
b1) eine erste feststehende Werkzeughälfte (14) oder
b2) alternativ eine erste feststehende Werkzeughälfte (14) und eine zweite feststehende Werkzeughälfte (14') aufweist,
c1) wobei im Hinblick auf Punkt b1) die bewegliche Werkzeughälfte (13) und der zumindest eine Schieber (15) derart zueinander und zur ersten feststehenden Werkzeughälfte (14) angeordnet oder anordenbar sind, dass im Bereich einer ersten Oberflächenkontur (16) der ersten feststehenden Werkzeughälfte (14) zwischen den vorgenannten eine erste Kavität (17) zur Erstellung des Trägerteils (4) und im Bereich einer zweiten Oberflächenkontur (18) der ersten feststehenden Werkzeughälfte (14) zwischen den vorgenannten eine zweite Kavität (19) zur Erstellung des Designteils (5) ausgebildet oder ausbildbar ist, oder
c2) wobei im Hinblick auf Pkt. b2) die bewegliche Werkzeughälfte (13) und der zumindest eine Schieber (15) derart zueinander und zur ersten feststehenden Werkzeughälfte (14) angeordnet oder anordenbar sind, dass im Bereich einer ersten Oberflächenkontur (16) der ersten feststehenden Werkzeughälfte (14) zwischen der beweglichen Werkzeughälfte (13), der ersten feststehenden Werkzeughälfte (14) und dem zumindest einen Schieber (15) eine erste Kavität (17) zur Erstellung des Trägerteils (4) ausgebildet oder ausbildbar ist, und dass die bewegliche Werkzeughälfte (13) und der zumindest eine Schieber (15) samt des/eines erstellten Trägerteils (4) im Bereich einer zweiten Oberflächenkontur (18) der zweiten feststehenden Werkzeughälfte (14') derart zur zweiten feststehenden Werkzeughälfte (14') angeordnet oder anordenbar sind, dass eine zweite Kavität (19) zur Erstellung des Designteils (5) ausgebildet oder ausbildbar ist.

## Claims

1. Panel part (1) for a vehicle (3) having a design part (5) and having at least one carrier part (4), wherein the at least one carrier part (4) has a basic structure (4a) and at least one support structure (4b) and is fastened to the design part (5) with the intervention of the at least one support structure (4b), wherein the carrier part (4) is designed and by means of the at least one support structure (4b) fastened to the design part (5) in such a manner that said carrier part (4) conjointly with the design part (5) forms a hollow profile (7) which, when viewed in the cross section, is closed at least in portions; wherein the at least one support structure (4b) is connected to the basic structure (4a) by way of a connecting portion (20), which connecting portion (20) has a reduced material thickness in comparison to the region of the basic structure (4a), wherein the connecting portion (20) with the reduced material thickness forms the transition towards the design part, and wherein the support structure (4b) comprises a leg which adjoins the basic structure (4a); wherein the design part (5) comprises two area portions which run at a mutual angle and the leg of the support structure (4b) is fastened in the apex of the angle.

2. Panel part (1) according to Claim 1, **characterized in that** the carrier part (4) is fastened to the design part (5) in a materially integral manner with the intervention of the at least one support structure (4b).

3. Panel part (1) according to Claim 2, **characterized in that** the carrier part (4) is fastened to the design part (5) in a laminar and materially integral manner with the intervention of the at least one support structure (4b) .

4. Panel part (1) according to one of the preceding claims, **characterized in that** the carrier part (4) has at least one first means (8) for attaching the latter to a bodywork part (2) of the vehicle (3) that supports the panel part (1), and/or the panel part (4) is assigned, or able to be assigned, at least one second means (9) for attaching the latter to said bodywork part (2).

5. Panel part (1) according to one of the preceding claims, **characterized in that** the design part (5) has at least one third means (11) for attaching the latter to a bodywork part (2) of the vehicle (3) that supports the panel part (1), and/or the design part (5) is assigned, or able to be assigned, at least one third means (11) for attaching the latter to said bodywork part (2).

6. Panel part (1) according to one of the preceding claims, **characterized in that** the carrier part (4) and the design part (5) are formed from a plastics material.

7. Panel part (1) according to one of the preceding claims, **characterized in that** the panel part (1) is formed by a rocker panel, a door panel, a wheel panel, a bumper, a faceplate or the like, having a visible design part (5) and at least one carrier part (4).

8. Vehicle (3) having a panel part (1) according to one of Claims 1 to 7.

9. Method for producing a panel part (1) for a vehicle (3), according to one of Claims 1 to 7, comprising the following method steps:
a) providing a movable tool half (13) and a first stationary tool half (14) of a plastic injection-moulding tool (12);
b) providing at least one slide (15);
c) mutually positioning the movable tool half (13) and the first stationary tool half (14) as well as the at least one slide (15) in such a manner that a first cavity (17) which corresponds to the structure of the carrier part (4) is formed in the region of a first surface contour (16) of the first stationary tool half (14) between the movable tool half (13), the first stationary tool half (14) and the at least one slide (15);
d) filling the first cavity (17) with plasticized plastics material;
e) upon solidification of the plastics material, releasing the movable tool half (13), including the carrier part (4) formed from said plastics material, and the at least one slide (15) from the stationary tool half (14) ;
f) transferring the movable tool half (13), including the carrier part (4) as a semi-finished product formed from said plastics material, and the at least one slide (15) into a region of a second surface contour (18) of the first stationary tool half (14), or alternatively into a region of a second surface contour (18) of a second stationary tool half (14') separated from the first stationary tool half (14), in such a manner that a second cavity (19) which corresponds to the structure of the design part (5) and is in direct contact with the formed carrier part (4) is formed between the movable tool half (13), including the carrier part (4), and the at least one slide (15) and the first or second stationary tool half (14, 14');
g) filling the second cavity (19) with plasticized plastics material in such a manner that the plastics material contacts the carrier part (4) and establishes a fastening, in particular a materially integral connection, to the latter; and
h) upon solidification of the plastics material, releasing the tool halves (13; 14, 14'), the slide (15) and the panel part (1) formed from said carrier part (4) and design part (5) from one another, and retrieving the panel part (1) from the plastic injection-moulding tool (12) .

10. Device for carrying out the method according to Claim 9, having a plastic injection-moulding tool (12) which has
a) a movable tool half (13), at least one slide (15); and
b1) a first stationary tool half (14); or
b2) alternatively, a first stationary tool half (14) and a second stationary tool half (14');
c1) wherein, with respect to point b1), the movable tool half (13) and the at least one slide (15) are disposed, or able to be disposed, in relation to one another and in relation to the first stationary tool half (14) in such a manner that a first cavity (17) for generating the carrier part (4) is formed, or able to be formed, in the region of a first surface contour (16) of the first stationary tool half (14) between the afore-mentioned, and a second cavity (19) for generating the design part (5) is formed, or able to be formed, in the region of a second surface contour (18) of the first stationary tool half (14) between the afore-mentioned,; or
c2) wherein, with respect to point b2), the movable tool half (13) and the at least one slide (15) are disposed, or able to be disposed, in relation to one another and in relation to the first stationary tool half (14) in such a manner that a first cavity (17) for generating the carrier part (4) is formed, or able to be formed, in the region of a first surface contour (16) of the first stationary tool half (14) between the movable tool half (13), the first stationary tool half (14) and the at least one slide (15), and that the movable tool half (13) and the at least one slide (15), including the/a generated carrier part (4), are disposed, or able to be disposed, in the region of a second surface contour (18) of the second stationary tool half (14') in relation to the second stationary tool half (14') in such a manner that a second cavity (19) for generating the design part (5) is formed, or able to be formed.

## Revendications

1. Pièce de recouvrement (1) pour un véhicule (3), avec une pièce esthétique (5) et avec au moins une pièce de support (4), l'au moins une pièce de support (4) présentant une structure de base (4a) et au moins une structure de soutien (4b) et étant fixée à la pièce esthétique (5) par l'intermédiaire de l'au moins une structure de soutien (4b), la pièce de support (4) étant réalisée et fixée à la pièce esthétique (5) au moyen de l'au moins une structure de soutien (4b) de telle sorte qu'elle réalise avec la pièce esthétique (5), au moins par sections, un profilé creux (7) fermé en section transversale,
l'au moins une structure de soutien (4b) étant reliée à la structure de base (4a) par le biais d'une section de liaison (20), laquelle section de liaison (20) présente une épaisseur de matériau réduite par rapport à la zone de la structure de base (4a), la section de liaison (20) avec l'épaisseur de matériau réduite réalisant la transition vers la pièce esthétique, et la structure de soutien (4b) comprenant une branche qui se raccorde à la structure de base (4a), la pièce esthétique (5) comprenant deux sections de surface s'étendant de manière angulaire l'une par rapport à l'autre et la branche de la structure de soutien (4b) étant fixée au sommet de l'angle.

2. Pièce de recouvrement (1) selon la revendication 1, **caractérisée en ce que** la pièce de support (4) est fixée à la pièce esthétique (5) par l'intermédiaire de l'au moins une structure de soutien (4b) par liaison de matière.

3. Pièce de recouvrement (1) selon la revendication 2, **caractérisée en ce que** la pièce de support (4) est fixée à la pièce esthétique (5) par l'intermédiaire de l'au moins une structure de soutien (4b) par liaison de matière sous forme plane.

4. Pièce de recouvrement (1) selon l'une quelconque des revendications précédentes, **caractérisée en ce que** la pièce de support (4) présente au moins un premier moyen (8) d'attache de celle-ci à une pièce de carrosserie (2) du véhicule (3) portant la pièce de recouvrement (1) et/ou au moins un deuxième moyen (9) d'attache de celle-ci à ladite pièce de carrosserie (2) est associé ou peut être associé à la pièce de support (4).

5. Pièce de recouvrement (1) selon l'une quelconque des revendications précédentes, **caractérisée en ce que** la pièce esthétique (5) présente au moins un troisième moyen (11) d'attache de celle-ci à une pièce de carrosserie (2) du véhicule (3) portant la pièce de recouvrement (1) et/ou au moins un troisième moyen (11) d'attache de celle-ci à ladite pièce de carrosserie (2) est associé ou peut être associé à la pièce esthétique (5).

6. Pièce de recouvrement (1) selon l'une quelconque des revendications précédentes, **caractérisée en ce que** la pièce de support (4) et la pièce esthétique (5) sont formées en un matériau plastique.

7. Pièce de recouvrement (1) selon l'une quelconque des revendications précédentes, **caractérisée en ce que** la pièce de recouvrement (1) est formée par un recouvrement de seuil, un recouvrement de porte, un recouvrement de roue, un pare-chocs, un panneau ou similaire, avec une pièce esthétique visible (5) et au moins une pièce de support (4).

8. Véhicule (3), avec une pièce de recouvrement (1) selon l'une quelconque des revendications 1 à 7.

9. Procédé de fabrication d'une pièce de recouvrement (1) pour un véhicule (3) selon l'une quelconque des revendications 1 à 7, avec les étapes suivantes :
a) la fourniture d'une moitié d'outil mobile (13) et d'une première moitié d'outil fixe (14) d'un outil de moulage par injection de matière plastique (12),
b) la fourniture d'au moins un coulisseau (15),
c) le positionnement de la moitié d'outil mobile (13) et de la première moitié d'outil fixe (14) ainsi que de l'au moins un coulisseau (15) les uns par rapport aux autres de telle sorte que, dans la zone d'un premier contour de surface (16) de la première moitié d'outil fixe (14), entre la moitié d'outil mobile (13), la première moitié d'outil fixe (14) ainsi que l'au moins un coulisseau (15), une première cavité (17) est réalisée, qui correspond à la structure de la pièce de support (4),
d) le remplissage de la première cavité (17) avec du matériau plastique plastifié,
e) après solidification du matériau plastique, le détachement de la moitié d'outil mobile (13), y compris la pièce de support (4) formée dudit matériau plastique et l'au moins un coulisseau (15), de la moitié d'outil fixe (14),
f) le transfert de la moitié d'outil mobile (13), y compris la pièce de support (4) formée dudit matériau plastique en tant que produit semi-fini et l'au moins un coulisseau (15), dans une zone d'un deuxième contour de surface (18) de la première moitié d'outil fixe (14) ou, en variante, dans une zone d'un deuxième contour de surface (18) d'une deuxième moitié d'outil fixe (14') séparée de la première moitié d'outil fixe (14), de telle sorte qu'entre la moitié d'outil mobile (13), y compris la pièce de support (4) et l'au moins un coulisseau (15), et la première ou la deuxième moitié d'outil fixe (14, 14'), une deuxième cavité (19) est réalisée, qui correspond à la structure de la pièce esthétique (5) et est en contact direct avec la pièce de support (4) formée,
g) le remplissage de la deuxième cavité (19) avec du matériau plastique plastifié de telle sorte que le matériau plastique entre en contact avec la pièce de support (4) et entre en fixation, notamment en liaison de matière, avec celle-ci, et
h) après solidification du matériau plastique, le détachement des moitiés d'outil (13 ; 14, 14'), du coulisseau (15) et de la pièce de recouvrement (1) formée de ladite pièce de support (4) et pièce esthétique (5) les uns des autres et le retrait de la pièce de recouvrement (1) de l'outil de moulage par injection de matière plastique (12).

10. Dispositif pour la mise en œuvre du procédé selon la revendication 9, avec un outil de moulage par injection de matière plastique (12), qui présente
a) une moitié d'outil mobile (13), au moins un coulisseau (15) ainsi que
b1) une première moitié d'outil fixe (14) ou
b2) en variante une première moitié d'outil fixe (14) et une deuxième moitié d'outil fixe (14'),
c1) en ce qui concerne le point b1), la moitié d'outil mobile (13) et l'au moins un coulisseau (15) étant agencés ou pouvant être agencés l'un par rapport à l'autre et par rapport à la première moitié d'outil fixe (14) de telle sorte que, dans la zone d'un premier contour de surface (16) de la première moitié d'outil fixe (14), une première cavité (17) est réalisée ou peut être réalisée entre les précités pour la création de la pièce de support (4) et, dans la zone d'un deuxième contour de surface (18) de la première moitié d'outil fixe (14), une deuxième cavité (19) est réalisée ou peut être réalisée entre les précités pour la création de la pièce esthétique (5), ou
c2) en ce qui concerne le point b2), la moitié d'outil mobile (13) et l'au moins un coulisseau (15) étant agencés ou pouvant être agencés l'un par rapport à l'autre et par rapport à la première moitié d'outil fixe (14) de telle sorte que, dans la zone d'un premier contour de surface (16) de la première moitié d'outil fixe (14), entre la moitié d'outil mobile (13), la première moitié d'outil fixe (14) et l'au moins un coulisseau (15), une première cavité (17) est réalisée ou peut être réalisée pour la création de la pièce de support (4), et la moitié d'outil mobile (13) et l'au moins un coulisseau (15), y compris la/une pièce de support (4) créée, étant agencés ou pouvant être agencés dans la zone d'un deuxième contour de surface (18) de la deuxième moitié d'outil fixe (14') par rapport à la deuxième moitié d'outil fixe (14') de telle sorte qu'une deuxième cavité (19) est réalisée ou peut être réalisée pour la création de la pièce esthétique (5).
